# FASCICULE DE BREVET EUROPEEN

(11) **EP 2 443 706 B1**
(45) Date de publication et mention de la délivrance du brevet: **24.12.2014**
(21) Numéro de dépôt: 10734262.8
(22) Date de dépôt: 17.06.2010
(51) Int. Cl.: H01S 3/08, H01S 3/06, H01S 3/108, H01S 3/113, H01S 3/117, H01S 3/23, H01S 3/082

(54) **GÉNÉRATEUR ET SYSTÈME LASER A SOUS CAVITÉS COUPLÉES**
GENERATOR UND LASERSYSTEM MIT GEKOPPELTEN SUBKAVITÄTEN
GENERATOR AND LASER SYSTEM COMPRISING COUPLED SUB-CAVITIES

(30) Priorité: 19.06.2009 FR 0902987
(43) Date de publication de la demande: 25.04.2012
(73) Titulaire: Centre National de la Recherche Scientifique, 75794 Paris Cedex 16 (FR); Compagnie Industrielle Des Lasers Cilas (Cilas), 45000 Orleans (FR)
(72) Inventeur: COUDERC, Vincent, F-87430 Verneuil / Vienne (FR); LEPROUX, Philippe, Paul, F-87000 Limoges (FR); DOUTRE, Florent, F-06000 Nice (FR); PAGNOUX, Dominique, F-87100 Limoges (FR)
(74) Mandataire: Novagraaf Technologies
(86) Numéro de dépôt international: PCT/FR2010/051216
(87) Numéro de publication internationale: WO 2010/146316

(56) Documents cités:
- EP-A1- 0 742 613
- US-A- 4 982 405
- US-A- 5 828 680
- HANSSON B ET AL: "Q-switched microchip laser with 65 ps timing jitter" ELECTRONICS LETTERS, IEE STEVENAGE, GB, vol. 36, no. 13, 22 juin 2000 (2000-06-22) , pages 1123-1124, XP006015384 ISSN: 0013-5194

## Description

### DOMAINE TECHNIQUE DE L'INVENTION

La présente invention se rapporte au domaine des sources laser produisant des impulsions de durée sub-nanoseconde.

Elle concerne plus particulièrement un système laser comprenant une cavité formée d'au moins deux sous-cavités ainsi que des moyens de pompage optique d'une première parmi ces au moins deux sous-cavités. Elle se rapporte également à un générateur laser comprenant au moins deux de ces systèmes laser.

### ETAT DE LA TECHNIQUE ANTERIEURE

L'état de la technique dans ce domaine comporte des sources laser aptes à produire des rayonnements généralement monochromatiques ou quasi-monochromatiques. De telles sources utilisent des cavités fonctionnant en régime de déclenchement passif, dénommé « Q-SWITCH ».

Un exemple d'une telle source laser est décrit dans le document de brevet US 2008/0247425 A1. Dans ce document, un microlaser monolithique déclenché passivement comporte une cavité laser formée d'un milieu à gain et d'un absorbant saturable, disposés entre deux couches diélectriques. Un faisceau de pompe éclaire le milieu à gain à travers une première couche diélectrique, ce qui provoque une excitation des ions et de l'énergie stockés dans le milieu à gain. Du fait que l'énergie à l'intérieur du milieu à gain augmente et que l'intensité intracavité à la longueur d'onde du microlaser augmente également, l'absorbant devient saturé, ce qui entraîne une extraction rapide d'une partie de l'énergie stockée sous forme impulsionnelle. Après l'émission de l'impulsion, l'absorbant n'est plus saturé pendant une certaine durée, avant de le devenir à nouveau et de provoquer l'émission d'une nouvelle impulsion. La fréquence de récurrence des impulsions est ainsi déterminée par les propriétés physiques de l'absorbant saturable et du milieu à gain.

Néanmoins, une telle source présente l'inconvénient de présenter une gigue temporelle non négligeable, typiquement de l'ordre de la microseconde.

Un laser à déclenchement et double cavité est proposé dans le document de brevet US 4,982,405, qui décrit un laser comprenant une cavité formée de deux sous-cavités résonantes. La première sous-cavité inclut un milieu à gain et est éclairée par un faisceau de pompe. La seconde sous-cavité inclut un milieu non-linéaire et est éclairée par un second faisceau laser incident. Ces deux sous-cavités sont adjacentes et sont couplées par la constitution d'un miroir partiellement réfléchissant en commun. La longueur du chemin optique de la seconde sous-cavité est ajustée de sorte à influencer le facteur Q de la première sous-cavité contenant le milieu à gain.

Cette solution ne permet cependant pas de générer une émission impulsionnelle monochromatique inférieure à la nanoseconde et qui soit à la fois stable et sans gigue temporelle. Des lasers déclenchés sont également connus de EP 0 742 613 et de "G-switched microchip laser with 65 ps timing jitter", B. Hansson et M. Anvidsson, Electronics Letters, vol 36, n°13, 22 juin 2000.

### EXPOSE DE L'INVENTION

Le but de la présente invention est de remédier à ce problème technique, en disposant deux des sous-cavités de sorte à former une sous-cavité passive intégrant un déclencheur passif, pompée de façon insuffisante pour générer une impulsion lumineuse, et une sous-cavité active intégrant un déclencheur actif couplée à la sous-cavité passive afin de provoquer le déclenchement de l'impulsion lumineuse.

L'approche de la solution a consisté à chercher à combiner les avantages des déclencheurs de type passif (génération d'impulsions courtes) et des déclencheurs de type actif (faible gigue temporelle) afin de résoudre le problème de la gigue temporelle des microlasers produisant des impulsions de durée subnanoseconde. L'application initialement visée concernait initialement le diagnostic cellulaire par cytométrie de flux, pour laquelle il est nécessaire de synchroniser temporellement une impulsion laser de test avec une cellule se propageant devant une fenêtre d'analyse.

Les déclencheurs passifs (de type absorbant saturable) ont la particularité d'engendrer des impulsions brèves lorsqu'ils sont introduits dans des cavités très courtes (cavité microlaser aux dimensions sub-centimétriques). Malheureusement, leur gigue temporelle au déclenchement est grande. Les déclencheurs actifs sont encombrants et, contrairement aux déclencheurs passifs, engendrent des impulsions plus longues mais possèdent une faible gigue temporelle.

L'un des buts de l'invention est donc d'utiliser simultanément ces deux systèmes tout en préservant leurs caractéristiques et leur environnement. Cette mise en oeuvre se traduit par leur intégration dans une cavité très courte, ce qui est actuellement impossible du fait de leur encombrement.

L'utilisation de deux cavités couplées permet de résoudre ce problème. Néanmoins, les caractéristiques du système laser doivent être telles que la cavité active a la potentialité de déclencher la cavité passive. La cavité passive forme alors l'impulsion courte sans influence notable de la première cavité après déclenchement. Pour cela, il est recommandé d'avoir une cavité passive très courte et une cavité active très longue pour qu'au moins un mode longitudinal de la cavité active puisse osciller au sein de la cavité passive.

Pour atteindre ces buts, la présente invention a pour objet un système laser comprenant une cavité formée d'au moins deux sous-cavités ainsi que des moyens de pompage optique d'une première parmi les au moins deux sous-cavités. Dans ce système, les moyens de pompage optique sont agencés de manière à ne pas atteindre le seuil d'émission laser de la première sous-cavité. Cette première sous-cavité comporte des moyens de génération d'une impulsion courte. Une seconde sous-cavité comporte des moyens de déclenchement externe. Ces première et seconde sous-cavités sont couplées de sorte que le déclenchement de cette seconde sous-cavité provoque le départ de l'impulsion courte générée par cette première sous-cavité.

Les première et seconde sous-cavités jouent le rôle de modules couplés l'un à l'autre d'une façon prédéterminée afin de dissocier la formation d'une impulsion de forte énergie grâce à une microcavité et l'amplification de cette impulsion. Ces deux modules étant intégrés au sein d'un résonateur unique, leur mise en cascade favorise la génération d'impulsions laser sub-nanosecondes et de forte énergie sans gigue temporelle par rapport à un signal de déclenchement externe.

Plus précisément, la première sous-cavité n'est pas pompée optiquement de façon suffisante pour atteindre à elle seule le seuil d'émission laser de la cavité. La seconde sous-cavité comporte quant à elle un moyen de déclenchement externe qui permet, du fait du couplage entre les deux sous-cavités, de provoquer le déclenchement d'une impulsion lumineuse de courte durée. Ce déclenchement à la fois actif et passif de la cavité laser permet d'atteindre des fréquences de récurrence entre 0 et 150 Khz et d'obtenir des durées d'impulsions sub-nanosecondes sans gigue temporelle.

Ainsi, par la combinaison d'un absorbant saturable - générant des impulsions courtes mais avec une gigue temporelle - et d'un déclenchement actif - générant des impulsions longues sans gigue temporelle -, il est rendu possible d'obtenir une source laser impulsionnelle apte à générer des impulsions courtes présentant une gigue temporelle négligeable.

De préférence, la première sous-cavité comporte un milieu à gain, afin d'amplifier la lumière émise par les moyens de pompage de cette sous-cavité, sans toutefois atteindre le seuil d'émission laser de la cavité.

De préférence, les moyens de génération d'une impulsion courte comprennent un absorbant saturable. Ce type d'élément est en effet particulièrement adapté à l'accumulation d'énergie lumineuse pendant une durée déterminée, pour ensuite la libérer suite à un déclenchement afin de générer des impulsions de courte durée.

Il est également avantageux que la seconde sous-cavité (active) comporte un milieu à gain afin d'amplifier le signal lumineux issu de la première sous-cavité.

Selon un mode particulier de mise en oeuvre de la seconde sous-cavité, les moyens de déclenchement externe comprennent un modulateur acousto-optique.

De préférence, les deux sous-cavités du système comportent à chacune de leurs extrémités un moyen de réflexion partielle de la lumière. A ce titre, une variante particulièrement avantageuse consiste à utiliser des miroirs de Bragg en guise de moyens de réflexion partielle.

Selon un mode de réalisation particulier, le couplage des deux sous-cavités s'opère par la disposition d'un moyen de réflexion partielle commun auxdites deux sous-cavités.

De préférence, les moyens de pompage optique sont agencés de manière à être sensiblement proche du seuil d'émission laser de ladite première sous-cavité sans l'atteindre. La gigue temporelle est en effet d'autant plus faible que l'on est loin du seuil d'émission et que l'on a la capacité à passer largement au dessus de ce seuil avec l'action de la seconde cavité active.

Aux fins de déclencher de manière synchronisée le départ d'une impulsion courte, les moyens de déclenchement externe sont aptes à être commandés par un signal de synchronisation.

Selon un mode particulier de réalisation, le système laser comprend des moyens de conversion de fréquence. Un tel système permet de générer d'autres fréquences que celle fixée par la nature du milieu laser.

Dans ce dernier cas, il peut être prévu que les moyens de conversion de fréquence se présentent sous la forme d'une fibre optique non-linéaire.

Selon un mode de réalisation avantageux, la seconde sous-cavité présente une dimension longitudinale plus grande que celle de la première sous-cavité, et préférentiellement beaucoup plus grande (par exemple d'un facteur 10), ce qui permet d'avoir au moins un mode longitudinal oscillant dans la seconde sous-cavité qui soit également capable d'osciller dans la première sous-cavité.

La présente invention concerne également un générateur laser comprenant au moins deux systèmes laser tels que décrits ci-dessus.

Selon un mode de réalisation particulier, les secondes sous-cavités d'au moins deux systèmes laser présentent un moyen de réflexion partielle en commun, ce qui permet de coupler celles-ci.

Afin de synchroniser au moins deux systèmes laser entre eux, le générateur peut comporter un moyen de synchronisation des moyens de pompage d'au moins deux systèmes laser.

Dans ce cas, une première variante consiste à agencer le moyen de synchronisation pour synchroniser temporellement les impulsions lumineuses issues des moyens de pompage correspondant, ce qui permet d'augmenter la puissance lumineuse du générateur.

Une seconde variante consiste à agencer le moyen de synchronisation pour désynchroniser temporellement les impulsions lumineuses issues des moyens de pompage correspondant, ce qui permet d'augmenter la fréquence de récurrence du générateur.

Selon un mode particulier de réalisation, les deuxièmes sous-cavités d'au moins deux systèmes laser présentent un moyen de déclenchement externe en commun.

### BREVE DESCRIPTION DES FIGURES

D'autres caractéristiques et avantages de l'invention ressortiront à la lecture de la description qui suit, en référence aux figures annexées, qui illustrent :
- la figure 1, un schéma représentant un système laser selon un premier mode de réalisation de l'invention,
- la figure 2, un schéma représentant un système laser selon un second mode de réalisation de l'invention,
- les figures 3A à 3C, des schémas représentant deux variantes d'un générateur laser selon un premier mode de réalisation de l'invention, et
- les figures 4A et 4B, des schémas représentant deux variantes d'un générateur laser avec cristal non-linéaire selon un second mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

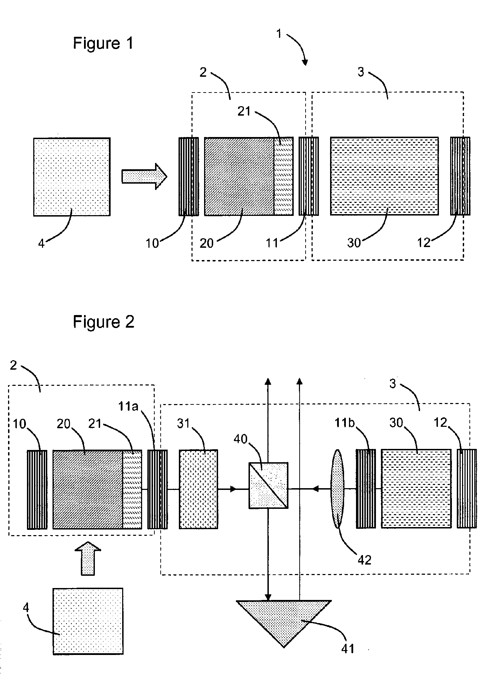

En référence à la figure 1, un système laser 1 selon un premier mode de réalisation de l'invention comporte une cavité formée de deux sous-cavités 2 et 3 couplées l'une à l'autre. Il peut être disposé dans cette cavité un nombre de sous-cavités supérieur à 2 sans pour autant sortir du cadre du présent brevet.

Le couplage entre cavités est de type interférométrique dans le sens où, comme il apparaîtra clairement à la lecture de la description qui suit, le couplage joue sur la même longueur d'onde et peut donner lieu à des pertes liées à la superposition en phase ou non des différentes composantes du rayonnement laser. Ainsi, la modification d'un paramètre d'une des cavités impose un changement dans les autres cavités.

La première sous-cavité 2 comprend un milieu à gain 20 et un absorbant saturable passif 21. Selon une variante de mise en oeuvre, ces deux éléments 20 et 21 peuvent être compris dans un seul et même composant. La micropuce 20 peut être un microlaser de type YAG 1,1% et l'absorbant saturable 21 du CR4 + (absorbant) abs 3 cm⁻¹.

Cette première sous-cavité 2 comprend également deux miroirs de Bragg 10 et 11, disposés à chaque extrémité de la sous-cavité.

La seconde sous-cavité 3 comprend un déclencheur externe 30 entouré de deux miroirs de Bragg 11 et 12.

Le couplage des deux sous-cavités 2 et 3 s'opère par la disposition commune du miroir de Bragg 11, ce dernier étant à une extrémité de la première sous-cavité 2 et à l'autre extrémité de la seconde sous-cavité 3. Les miroirs de Bragg 10 et 12 - aux deux autres extrémités des deux sous-cavités - constituent alors les deux miroirs entourant la cavité principale.

Le système laser 1 selon ce mode de réalisation comporte enfin un moyen de pompage optique 4 de la première sous-cavité 2. Il est disposé vis-à-vis de cette sous-cavité de façon à ne pas atteindre le seuil d'émission laser de la cavité, tout en étant sensiblement proche.

Par le couplage entre les deux sous-cavités, l'absorbant saturable 21 de la première sous-cavité 2 peut stocker l'énergie lumineuse de pompage et ne la libérer que sous l'effet du déclenchement externe opéré par le déclencheur 30 de la seconde sous-cavité 3, de sorte à atteindre le seuil laser de la cavité. On obtient ainsi la génération d'une impulsion lumineuse de courte durée et de forte énergie, commandée par un déclencheur externe à la sous-cavité pompée. La fréquence de fonctionnement du déclencheur 30 détermine alors la fréquence d'émission des impulsions lumineuses issues du système laser 1. La durée de l'impulsion optique engendrée est déterminée par la longueur de la cavité 1 et par le type d'absorbant saturable positionné à l'intérieur.

Le déclenchement actif de la seconde cavité, par le déclencheur 30, entraîne ainsi le déclenchement passif, par saturation de l'absorbant saturable 21, de la première sous-cavité.

Le déclencheur externe 30 peut être par exemple :
- un modulateur, par exemple de type MOA (acousto-optique), EO (électro-optique), MOEMS (micro-opto-électro-mécanique), etc.,
- un autre laser, par exemple un microlaser à impulsions courtes, ou
- une diode laser picoseconde.

Pour une diode de pompe 4 présentant un maximum d'émission à une longueur d'onde de 808 nanomètres et une puissance moyenne de 3 watts, il peut être par exemple utilisés un miroir 10 dont le maximum de réflexion se situe à 1064 nanomètres et le minimum à 808 nanomètres, un miroir 11 de coefficient de réflexion 87% et un miroir 12 de coefficient de réflexion 95%. Une gigue temporelle de l'ordre de la centaine de picosecondes peut alors être obtenue.

Selon une variante avantageuse, la seconde sous-cavité 3 peut également comporter un milieu à gain afin d'amplifier le signal lumineux et obtenir ainsi une plus forte densité d'énergie lumineuse.

Selon une autre variante avantageuse, plusieurs systèmes peuvent être mis en cascade avec le système laser selon l'invention, afin de réaliser une montée en puissance lumineuse.

Selon un mode de réalisation avantageux, la seconde sous-cavité présente une dimension longitudinale plus grande que celle de la première sous-cavité, et préférentiellement beaucoup plus grande (par exemple d'un facteur supérieur ou égal à 10), ce qui permet d'avoir au moins un mode longitudinal oscillant dans la seconde sous-cavité qui soit également capable d'osciller dans la première sous-cavité.

On décrit maintenant un second mode de réalisation de l'invention, avec adjonction d'un milieu non-linéaire en vue de réaliser un système d'émission lumineuse à large bande spectrale, en référence à la figure 2.

Le système laser comprend ici deux sous-cavités 3 et 2. Le couplage entre ces dernières n'est plus assuré par la disposition d'un miroir commun aux deux sous-cavités, mais par la disposition dans un même axe de leurs miroirs 11a et 11b.

Le système comprend également, dans la seconde sous-cavité 3, un élément non-linéaire 31, un polariseur 40, un élément de renvoi 41 (optionnel, afin de renvoyer le faisceau vers un mesureur de puissance lumineuse) et une lame demi-onde 42.

L'élément non-linéaire 31 permet d'étaler le spectre de l'impulsion lumineuse centrale oscillant dans la cavité, sans affecter la formation de l'impulsion. Cet élément peut être constitué de fibres ou de cristaux. Il permet de fournir un spectre large dans le domaine infrarouge ou visible tout en maintenant une durée d'impulsion de quelques centaines de picosecondes.

Ce mode de réalisation intégrant un second laser formé par les éléments 11b, 30 et 12 permet d'améliorer le déclenchement de la première cavité en saturant plus facilement son milieu à gain avec l'apport d'énergie optique extérieure. Cela permet de contrôler plus facilement la gigue temporelle de la première cavité. Les éléments 40 et 42 réalisent ensemble un contrôleur de puissance permettant de doser la quantité d'énergie envoyée vers la cavité 1.

On peut ainsi réaliser un continuum intracavité en régime « Q-SWITCH » stable. Ce spectre large bande est généré dans la cavité amplificatrice (c'est-à-dire la sous-cavité 3), donc dans une cavité externe à la cavité laser (la sous-cavité 2).

Les exemples qui suivent concernent différents modes de réalisation d'un générateur laser conforme à l'invention, c'est-à-dire formé d'au moins deux systèmes laser selon l'invention.

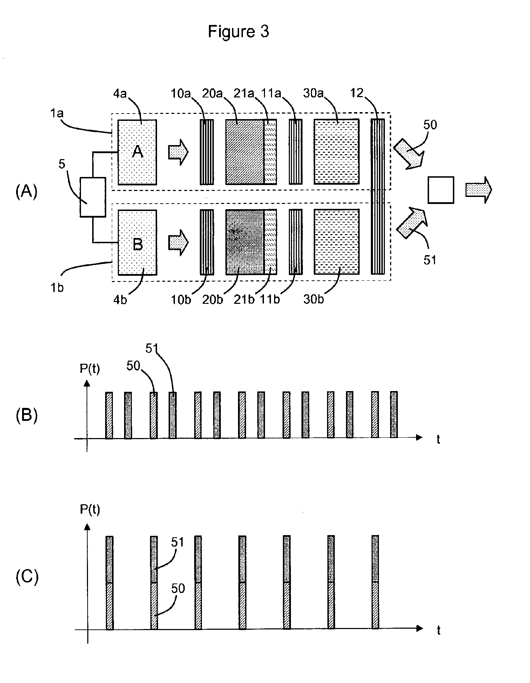

Selon le mode de réalisation illustré par la figure 3A, un générateur laser comprend deux systèmes laser 1a et 1b, adjacents l'un par rapport à l'autre.

Ces deux systèmes laser 1a et 1b comportent respectivement :
- des moyens de pompage optique 4a et 4b,
- des miroirs 10a, 11a et 10b, 11b,
- des milieux à gain 20a et 20b,
- des absorbants saturables 21a et 21b,
- des déclencheurs externes 30a et 30b.

Le dernier miroir 12 est commun aux deux systèmes laser 1a et 1b. Les milieux à gain 20a et 20b, ainsi que les absorbants saturables 21a et 21b, présentent des propriétés physiques identiques. Dans une autre variante de mise en oeuvre, leurs propriétés physiques peuvent être différentes.

Chacun des deux systèmes laser délivre des impulsions avec une certaine période de récurrence. Dans le cas où tous les éléments constitutifs des systèmes laser sont similaires de l'un à l'autre des systèmes, les durées des impulsions, ainsi que leurs périodes de récurrence et leurs puissances sont identiques.

Les deux faisceaux de sortie 50 et 51, issus respectivement du premier et du deuxième système laser, sont ensuite superposés.

Un moyen de synchronisation 5 est relié aux deux moyens de pompage 4a et 4b, afin de synchroniser les faisceaux de pompe qui en sont issus. Différents types de synchronisation sont alors envisageables, en particulier :
- les moyens de synchronisation sont agencés pour désynchroniser temporellement les impulsions lumineuses issues des deux moyens de pompage correspondant (figure 3B) : les impulsions lumineuses 50 et 51 (issues respectivement des systèmes 1a et 1b) sont alors décalées d'une durée correspondant, par exemple, à la demi-période de récurrence de l'un des deux systèmes, et la fréquence de récurrence du générateur est ainsi doublée, ou
- le moyen de synchronisation est agencé pour synchroniser temporellement les impulsions lumineuses issues des deux moyens de pompage correspondant (figure 3C) : les impulsions lumineuses 50 et 51 sont alors superposées, et la puissance du générateur ainsi est doublée.

D'autres variantes peuvent être mises en oeuvre selon ce schéma, avec différents types de synchronisation et un nombre de systèmes laser synchronisés entre eux supérieur à deux.

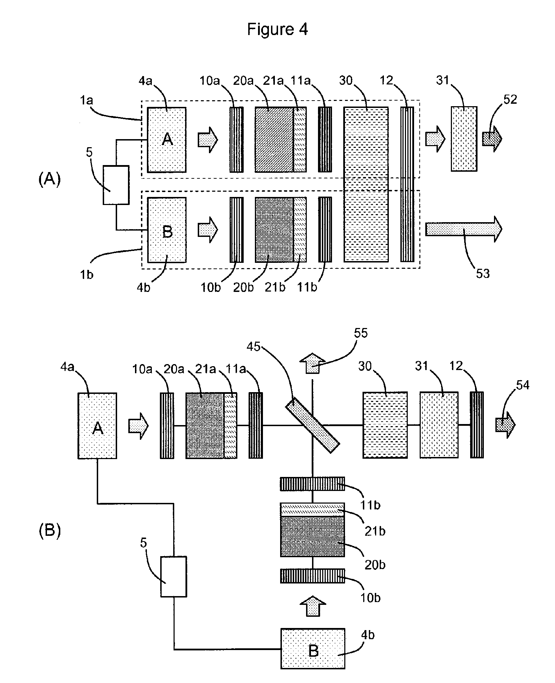

Selon le mode de réalisation illustré par la figure 4A, un générateur laser comprend deux systèmes laser 1a et 1b, adjacents l'un par rapport à l'autre, et fonctionnant en parallèle.

Les moyens de pompage optique 4a et 4b, les miroirs 10a, 11a et 10b, 11b, les milieux à gain 20a et 20b et les absorbants saturables 21a et 21b sont identiques à ceux du mode de réalisation illustré par la figure 3A. Les deux systèmes laser 1a et 1b présentent un déclencheur externe 30 et un dernier miroir 12 en commun. Un moyen de synchronisation 5 est également relié aux deux moyens de pompage 4a et 4b, afin de synchroniser les faisceaux de pompe qui en sont issus.

Sur le chemin du faisceau laser de sortie issu du premier système laser 1a est disposé un élément non-linéaire 31 comme décrit dans le mode de réalisation illustré par la figure 2. Cet élément 31 permet d'élargir le spectre du faisceau laser de sortie, afin d'obtenir un faisceau 52 de sortie qui soit impulsionnel et à large domaine spectral. Le faisceau laser de sortie 53 issu du second système laser 1b n'est quant à lui pas modifié.

On obtient ainsi deux faisceaux de sortie 52 et 53, dont l'un est à spectre large et l'autre quasi-monochromatique, ces deux faisceaux étant synchronisés l'un par rapport à l'autre, ce qui présentent des avantages pour des applications, par exemple, de détection de signatures spectrale de particules de type CARS (diffusion Raman anti-Stokes cohérente, soit en langue anglo-saxonne « Coherent Anti-Stokes Raman Scattering »).

Selon le mode de réalisation illustré par la figure 4B, un générateur laser comprend deux systèmes laser, adjacents l'un par rapport à l'autre, et fonctionnant en cascade.

Les éléments constitutifs des deux systèmes laser utilisés sont identiques à ceux décrits dans le mode de réalisation précédent en référence à la figure 4A. En particulier, les deux systèmes laser présentent un déclencheur externe 30 et un dernier miroir 12 en commun. Les autres éléments sont situés à 90° l'un par rapport à l'autre, et du même côté d'une lame semi-réfléchissante 45, chacun à 45° de celle-ci. Un moyen de synchronisation 5 est également relié aux deux moyens de pompage 4a et 4b.

Le déclencheur externe 30, l'élément non linéaire 31 et le miroir en commun 12 sont situés de l'autre côté de la lame 45, à 45° de celle-ci. Enfin, une dernière partie, à 90° des éléments 30, 31 et 12, et à 45° de la lame 45, ne comprend aucun élément.

De façon analogue au mode de réalisation de la figure 4A, on obtient ici deux faisceaux de sortie 54 et 55, dont l'un est à spectre large (54) et l'autre quasi-monochromatique (55), ces deux faisceaux étant synchronisés l'un par rapport à l'autre. La différence avec le mode de réalisation de la figure 4A est que les systèmes laser sont mis ici en cascade, puisque les faisceaux lumineux se superposent au niveau de la lame 45, 50% de la lumière constituant le faisceau 55 et les 50% constituant le faisceau 54. Dans le précédent mode de réalisation, en parallèle, chaque faisceau était issu de l'un des deux systèmes laser.

Les modes de réalisation précédemment décrits de la présente invention sont donnés à titre d'exemples et ne sont nullement limitatifs. Il est entendu que l'homme du métier est à même de réaliser différentes variantes de l'invention sans pour autant sortir du cadre du brevet.

En particulier, différents modes de réalisation peuvent être mis en oeuvre en fonction de l'application envisagée, par exemple des sources laser à large domaine spectral pour des expérimentations en biophotonique, des applications de spectroscopie, de caractérisation de matériaux en terme de transparence ou de dispersion, etc.

## Revendications

1. Système laser comprenant une cavité (1) formée d'au moins deux sous-cavités (2,3) ainsi que des moyens (4) de pompage optique d'une première (2) parmi lesdites au moins deux sous-cavités (2,3), **caractérisé en ce que** lesdits moyens (4) de pompage optique sont agencés de manière à ne pas atteindre le seuil d'émission laser de la première sous-cavité (2), ladite première sous-cavité (2) comportant des moyens (21) de génération d'une impulsion courte, une seconde sous-cavité (3) comportant des moyens (30) de déclenchement externe actif, **et en ce que** lesdites première et seconde sous-cavités (2, 3) sont couplées de manière interférométrique, de sorte que le déclenchement externe actif de ladite seconde sous-cavité (3) provoque le départ de l'impulsion courte générée par ladite première sous-cavité (2).

2. Système laser selon la revendication 1, dans lequel les moyens (21) de génération d'une impulsion courte comprennent un absorbant saturable (21).

3. Système laser selon l'une des revendications 1 à 3, dans lequel la seconde sous-cavité (3) comporte un milieu à gain.

4. Système laser selon l'une des revendications précédentes, dans lequel les moyens (30) de déclenchement externe comprennent un modulateur acousto-optique (30).

5. Système laser selon l'une des revendications précédentes, dans lequel les deux sous-cavités (2,3) comportent à chacune de leurs extrémités un moyen (10, 11, 12) de réflexion partielle de la lumière.

6. Système laser selon la revendication précédente, dans lequel les moyens (10, 11, 12) de réflexion partielle sont des miroirs de Bragg.

7. Système laser selon l'une des revendications 6 ou 7, dans lequel le couplage des deux sous-cavités (2, 3) s'opère par la disposition d'un moyen (11) de réflexion partielle commun auxdites deux sous-cavités (2, 3).

8. Système laser selon l'une des revendications précédentes, dans lequel les moyens (4) de pompage optique sont agencés de manière à être sensiblement proche du seuil d'émission laser de ladite première sous-cavité (2) sans l'atteindre.

9. Système laser selon l'une des revendications précédentes, dans lequel les moyens (30) de déclenchement externe sont aptes à être commandés par un signal de synchronisation.

10. Système laser selon l'une des revendications précédentes, comprenant des moyens (31) de conversion de fréquence.

11. Système laser selon la revendication précédente, dans lequel les moyens (31) de conversion de fréquence se présentent sous la forme d'une fibre optique non-linéaire (31).

12. Système laser selon l'une des revendications précédentes, dans lequel la seconde sous-cavité (3) présente une dimension longitudinale plus grande que celle de la première sous-cavité (2).

13. Générateur laser comprenant au moins deux systèmes laser (1a, 1b) selon l'une des revendications précédentes.

14. Générateur laser selon la revendication précédente, dans lequel les secondes sous-cavités d'au moins deux systèmes laser (1a, 1b) présentent un moyen (12) de réflexion partielle en commun.

15. Générateur laser selon la revendication 14 ou 15, comportant un moyen (5) de synchronisation des moyens (4a, 4b) de pompage d'au moins deux systèmes laser (1a, 1b).

16. Générateur laser selon la revendication 15, dans lequel le moyen (5) de synchronisation est agencé pour synchroniser temporellement les impulsions lumineuses issues des moyens (4a, 4b) de pompage correspondant.

17. Générateur laser selon la revendication 15, dans lequel le moyen (5) de synchronisation est agencé pour désynchroniser temporellement les impulsions lumineuses issues des moyens (4a, 4b) de pompage correspondant.

18. Générateur laser selon l'une des revendications 14 à 18, dans lequel les secondes sous-cavités d'au moins deux systèmes laser (1a, 1b) présentent un moyen (30) de déclenchement externe en commun.

## Patentansprüche

1. Lasersystem, umfassend einen Hohlraum (1), der aus mindestens zwei Unterhohlräumen (2, 3) sowie Mitteln (4) zum optischen Pumpen eines ersten (2) von den mindestens zwei Unterhohlräumen (2, 3) gebildet ist, **dadurch gekennzeichnet, dass** die Mittel (4) zum optischen Pumpen derart angeordnet sind, dass sie die Laseremissionsschwelle des ersten Unterhohlraums (2) nicht erreichen, wobei der erste Unterhohlraum (2) Mittel (21) zur Erzeugung eines kurzen Impulses umfasst, wobei ein zweiter Unterhohlraum (3) Mittel (30) zur aktiven externen Auslösung umfasst, und dadurch, dass der erste und der zweite Unterhohlraum (2, 3) auf interferometrische Weise gekoppelt sind, so dass die aktive externe Auslösung des zweiten Unterhohlraums (3) den Start des kurzen Impulses hervorruft, der vom ersten Unterhohlraum (2) erzeugt wurde.

2. Lasersystem nach Anspruch 1, wobei die Mittel (21) zur Erzeugung eines kurzen Impulses einen sättigbaren Absorber (21) umfassen.

3. Lasersystem nach einem der Ansprüche 1 bis 3, wobei der zweite Unterhohlraum (3) ein Verstärkungsmedium umfasst.

4. Lasersystem nach einem der vorhergehenden Ansprüche, wobei die Mittel (30) zur externen Auslösung einen akusto-optischen Modulator (30) umfassen.

5. Lasersystem nach einem der vorhergehenden Ansprüche, wobei die zwei Unterhohlräume (2, 3) an jedem ihrer Enden ein Mittel (10, 11, 12) zur teilweisen Reflexion des Lichts umfassen.

6. Lasersystem nach dem vorhergehenden Anspruch, wobei die Mittel (10, 11, 12) zur teilweisen Reflexion Bragg-Spiegel sind.

7. Lasersystem nach einem der Ansprüche 6 oder 7, wobei die Kopplung der zwei Unterhohlräume (2, 3) durch die Positionierung eines Mittels (11) zur teilweisen Reflexion erfolgt, das den zwei Unterhohlräumen (2, 3) gemeinsam ist.

8. Lasersystem nach einem der vorhergehenden Ansprüche, wobei die Mittel (4) zum optischen Pumpen derart angeordnet sind, dass sie im Wesentlichen nahe der Laseremissionsschwelle des ersten Unterhohlraums (2) sind, ohne sie zu erreichen.

9. Lasersystem nach einem der vorhergehenden Ansprüche, wobei die Mittel (30) zur externen Auslösung dazu ausgelegt sind, um durch ein Synchronisierungssignal gesteuert zu werden.

10. Lasersystem nach einem der vorhergehenden Ansprüche, umfassend Mittel (31) zur Frequenzkonversion.

11. Lasersystem nach dem vorhergehenden Anspruch, wobei die Mittel (31) zur Frequenzkonversion die Form einer nicht linearen optischen Faser (31) aufweisen.

12. Lasersystem nach einem der vorhergehenden Ansprüche, wobei der zweite Unterhohlraum (3) eine Längsabmessung aufweist, die größer als diejenige des ersten Unterhohlraums (2) ist.

13. Lasergenerator, umfassend mindestens zwei Lasersysteme (1a, 1b) nach einem der vorhergehenden Ansprüche.

14. Lasergenerator nach dem vorhergehenden Anspruch, wobei die zweiten Unterhohlräume von mindestens zwei Lasersystemen (1a, 1b) ein Mittel (12) zur gemeinsamen teilweisen Reflexion aufweisen.

15. Lasergenerator nach Anspruch 14 oder 15, umfassend ein Mittel (5) zur Synchronisierung der Pumpmittel (4a, 4b) von mindestens zwei Lasersystemen (1a, 1b).

16. Lasergenerator nach Anspruch 15, wobei das Synchronisierungsmittel (5) angeordnet ist, um vorübergehend die Lichtimpulse zu synchronisieren, die aus entsprechenden Pumpmitteln (4a, 4b) stammen.

17. Lasergenerator nach Anspruch 15, wobei das Synchronisierungsmittel (5) angeordnet ist, um vorübergehend die Lichtimpulse zu desynchronisieren, die aus entsprechenden Pumpmitteln (4a, 4b) stammen.

18. Lasergenerator nach einem der Ansprüche 14 bis 18, wobei die zweiten Unterhohlräume von mindestens zwei Lasersystemen (1a, 1b) ein Mittel (30) zur gemeinsamen externen Auslösung aufweisen.

## Claims

1. Laser system comprising a cavity (1) formed by at least two sub-cavities (2, 3) as well as means (4) for the optical pumping of a first (2) from said at least two sub-cavities (2, 3), **characterised in that** said optical pumping means (4) are arranged so as not to reach the laser emission threshold of the first sub-cavity (2), said first sub-cavity (2) comprising means (21) for generating a short pulse, a second sub-cavity (3) comprising active external triggering means (30), and **in that** said first and second sub-cavities (2, 3) are coupled interferometrically, so that the active external triggering of said second sub-cavity (3) causes the departure of the short pulse generated by said first sub-cavity (2).

2. Laser system according to claim 1, wherein the means (21) for generating a short pulse comprise a saturatable absorbent (21).

3. Laser system according to one of claims 1 to 2, wherein the second sub-cavity (3) comprises a gain medium.

4. Laser system according to one of the preceding claims, wherein the external triggering means (30) comprise an acousto-optical modulator (30).

5. Laser system according to one of the preceding claims, wherein the two sub-cavities (2, 3) comprise at each of their ends a means (10, 11, 12) for the partial reflection of light.

6. Laser system according to the preceding claim, wherein the partial reflection means (10, 11, 12) are Bragg mirrors.

7. Laser system according to one of claims 6 or 7, wherein the coupling of the two sub-cavities (2, 3) is effected by the arrangement of a partial-reflection means (11) common to said two sub-cavities (2, 3).

8. Laser system according to one of the preceding claims, wherein the optical pumping means (4) are arranged so as to be substantially close to the laser emission threshold of said first sub-cavity (2) without reaching it.

9. Laser system according to one of the preceding claims, wherein the external triggering means (30) are able to be controlled by a synchronisation signal.

10. Laser system according to one of the preceding claims, comprising frequency-conversion means (31).

11. Laser system according to the preceding claim, wherein the frequency-conversion means (31) are in the form of a non-linear optical fibre (31).

12. Laser system according to one of the preceding claims, wherein the second sub-cavity (3) has a longitudinal dimension greater than that of the first sub-cavity (2).

13. Laser generator comprising at least two laser systems (1a, 1b) according to one of the preceding claims.

14. Laser generator according to the preceding claim, wherein the second sub-cavities of at least two laser systems (1a, 1b) have a partial-reflection means (12) in common.

15. Laser generator according to claim 14 or 15, comprising a means (5) for synchronising the pumping means (4a, 4b) of at least two laser systems (1a, 1b).

16. Laser generator according to claim 15, wherein the synchronisation means (5) is arranged to temporally synchronise the light pulses issued from the corresponding pumping means (4a, 4b).

17. Laser generator according to claim 15, wherein the synchronisation means (5) is arranged to temporally desynchronise the light pulses issued from the corresponding pumping means (4a, 4b).

18. Laser generator according to one of claims 14 to 17, wherein the second sub-cavities of at least two laser systems (1a, 1b) have an external triggering means (30) in common.
